(19) Europäisches Patentamt
European Patent Office
Office européen des brevets

(11) EP 4 611 062 A1

(12) **EUROPEAN PATENT APPLICATION**
published in accordance with Art. 153(4) EPC

(43) Date of publication:
**03.09.2025 Bulletin 2025/36**

(21) Application number: **23929484.6**

(22) Date of filing: **31.03.2023**

(51) International Patent Classification (IPC):
***H01M 4/36*** (2006.01) ***H01M 10/0567*** (2010.01)
***H01M 4/587*** (2010.01) ***H01M 4/38*** (2006.01)
***H01M 10/0525*** (2010.01) ***H01M 4/62*** (2006.01)

(52) Cooperative Patent Classification (CPC):
**H01M 4/36;** H01M 4/38; H01M 4/587; H01M 4/62; H01M 10/0525; H01M 10/0567; Y02E 60/10

(86) International application number:
**PCT/CN2023/085707**

(87) International publication number:
**WO 2024/197901 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **XU, Ningbo**
  **Ningde, Fujian 352100 (CN)**
- **ZOU, Hailin**
  **Ningde, Fujian 352100 (CN)**
- **CHEN, Peipei**
  **Ningde, Fujian 352100 (CN)**

(74) Representative: **Jacob, Reuben Ellis**
**Maucher Jenkins**
**Seventh Floor Offices**
**Artillery House**
**11-19 Artillery Row**
**London SW1P 1RT (GB)**

(54) **SECONDARY BATTERY AND ELECTRICAL APPARATUS**

(57) The present application provides a secondary battery and an electrical apparatus. The secondary battery comprises: a negative pole piece and an electrolyte, the negative pole piece comprising a silicon-carbon composite material having a three-dimensional-network cross-linked pore structure; and the electrolyte comprising lithium fluorosulfonyl imide. The three-dimensional-network cross-linked pore structure of the silicon-carbon composite material acts in connect with the lithium fluorosulfonyl imide in the electrolyte to enhance the high-temperature cycle performance and the storage performance of the battery.

1

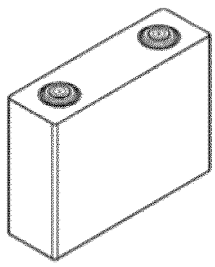

FIG. 1

EP 4 611 062 A1

## Description

TECHNICAL FIELD

The present application relates to the technical field of secondary batteries, and in particular, to a secondary battery and an electric device.

BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace.

With the increasing market demand for battery energy, the adoption of high capacity electrode materials has become a common recognition in the art. However, many electrode materials with high theoretical capacity have poor cycle performance and thermal stability. How to improve the cycle performance of the battery, especially the performance at high temperature, through mutual cooperation of components of the battery is a technical problem to be solved urgently in the field.

SUMMARY

The present application is made in view of the above problems, and its purpose is to provide a secondary battery. Through the matching of the electrolyte and the negative electrode material, the thermal stability and the chemical stability of the electrolyte are improved, and the cycle capacity retention rate and the storage capacity retention rate at high temperature of the battery are improved.

The present application provides a secondary battery including a negative electrode plate and an electrolyte. The negative electrode plate includes a silicon-carbon composite material having a three-dimensional network cross-linked pore structure; the electrolyte includes a lithium sulfonimide salt.

The silicon-carbon composite material having a three-dimensional network cross-linked pore structure has a stable porous skeleton and good mechanical strength, and can effectively reduce the volume change of silicon before and after charging and discharging while loading a high silicon content. Meanwhile, the lithium sulfonimide salt can easily enter the pore structure of the silicon-carbon composite material to generate a solid electrolyte film containing sulfur oxide and nitrogen oxide on the interface of a silicon-based material, thereby improving the high-temperature cycle performance and the storage performance of the battery.

In any embodiment, a pore volume per unit mass of the silicon-carbon composite material is Vm in $cm^3/g$; in the electrolyte, a mass proportion of the lithium sulfonimide salt based on the total mass of the electrolyte is EL in g/g; EL:Vm is 0.1-10, and preferably 0.5-6.

When the ratio EL:Vm of the pore volume Vm of the silicon-carbon composite material to the mass proportion EL of the lithium sulfonimide salt in the electrolyte satisfies the range described above, the addition amount of the lithium sulfonimide salt can form mutual cooperation with the pore volume Vm of the silicon-carbon composite material, thereby improving the high-temperature cycle performance and the high-temperature storage performance of the battery.

In any embodiment, the pore volume Vm per unit mass of the silicon-carbon composite material is 0.01-0.3 $cm^3/g$, and optionally 0.04-0.15 $cm^3/g$.

When the pore volume of the silicon-carbon composite material satisfies the range described above, both the mechanical strength of the silicon-carbon composite material and the silicon loading amount can be ensured, and the high-temperature performance of the battery can be improved by effective cooperation with the lithium sulfonimide salt in the electrolyte.

In any embodiment, a specific surface area per unit mass of the silicon-carbon composite material is SSA in $m^2/g$; in the electrolyte, a mass proportion of the lithium sulfonimide salt based on the total mass of the electrolyte is EL in g/g; EL:SSA is 0.002-0.2, and optionally 0.01-0.08.

When the ratio EL:SSA of the mass proportion of the lithium sulfonimide salt in the electrolyte to the specific surface area SSA of the silicon-carbon composite material is within the range described above, the lithium sulfonimide salt can be effectively embedded into the pore structure of the silicon-carbon composite material to make full contact with the silicon-carbon composite material, so as to improve the interface stability, thereby improving the high-temperature performance of the battery.

In any embodiment, the specific surface area SSA of the silicon-carbon composite material is 2-10 $m^2/g$, and optionally 3-7 $m^2/g$.

When the specific surface area SSA of the silicon-carbon composite material satisfies the range described above, the silicon-carbon composite material has a large specific surface area and relatively good dynamic performance.

In any embodiment, in the electrolyte, a mass proportion of the lithium sulfonimide salt based on the total mass of the electrolyte is EL in g/g; a total pore volume of pores with a pore size less than or equal to 100 nm in the silicon-carbon composite material is V1 $cm^3/g$; EL:V1 is 1-100, and optionally 7-62.

When the ratio EL:V1 of the mass proportion of the lithium sulfonimide salt in the electrolyte to the total pore volume V1 of pores with a pore size of less than or equal to 100 nm in the silicon-carbon composite material satisfies the range described above, the lithium sulfonimide salt can effectively enter the pore structure of the silicon-carbon composite material, such that the stability of an electrode/electrolyte interface is improved, and thus the high-temperature storage life of the battery is prolonged.

In any embodiment, V1 of the silicon-carbon composite material is ≥ 0.001 $cm^3/g$, and optionally 0.005-0.01 $cm^3/g$.

When V1 of the silicon-carbon composite material satisfies the range described above, the silicon-carbon composite material can not only have good mechanical strength, but also effectively cooperate with the lithium sulfonimide salt in the electrolyte, thereby improving the cycle performance of the battery.

In any embodiment, the lithium sulfonimide salt is represented by formula I,

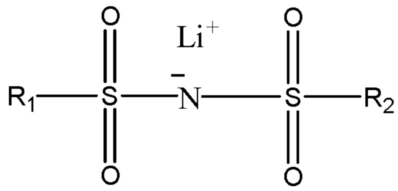

formula I

where $R_1$ and $R_2$ are each independently selected from halogen and halogen-substituted or unsubstituted $C_1$-$C_6$ alkyl.

In any embodiment, the lithium sulfonimide salt is selected from at least one of lithium bis(fluorosulfonyl)imide

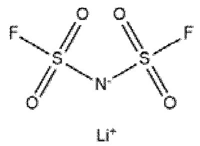

,

lithium bis(trifluoromethanesulfonyl)imide

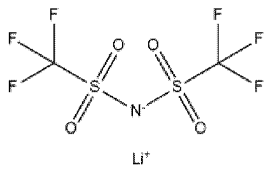

,

and lithium (fluorosulfonyl)(trifluoromethanesulfonyl)imide

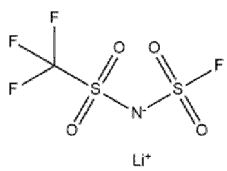

.

The lithium sulfonimide salts described above can not only improve the thermal stability and chemical stability of the electrolyte, but also generate components containing S and N elements in an interface film, so as to improve the high-temperature stability of an electrode/electrolyte interface, thereby improving the high-temperature cycle performance and storage performance of the battery.

In any embodiment, the silicon-carbon composite material includes carbon matrix particles and silicon nanoparticles. The carbon matrix particles have a three-dimensional network cross-linked pore structure; the silicon nanoparticles are at least partially embedded in the three-dimensional network cross-linked pore structure of the carbon matrix particles.

The carbon matrix particles of the present application have a stable porous skeleton structure, with strong supporting capacity, which is manifested as relatively high stress resistance, and they have excellent mechanical properties and electrical conductivity. The carbon matrix particles include a three-dimensional network cross-linked pore structure, which provides a relatively large amount of space for embedding the silicon-based nanoparticles, and they can be used for storing a large amount of silicon, thereby effectively improving the silicon loading amount in the silicon-carbon composite material. After the carbon matrix particles and the silicon-based nanoparticles are compounded, the electrical conductivity of the silicon-carbon composite material can be improved, the volume effect of silicon during a lithium deintercalation process can be relieved, and the stress change of the silicon-based nanoparticles can be fully borne, such that the structural stability of the silicon-carbon composite material is ensured, and the cycle performance and the lithium storage capacity of the silicon-carbon composite material are improved. Therefore, when the silicon-carbon composite material is applied to a secondary battery, the cycle performance and energy density of the secondary battery can be improved.

In any embodiment, a mass proportion of the silicon nanoparticles in the silicon-carbon composite material is greater than or equal to 40%, and optionally 40%-60%.

The negative electrode material used in the secondary battery of the present application realizes high loading of the silicon nanoparticles in the negative electrode material by using the carbon-based material having a three-dimensional network cross-linked pore structure, such that the silicon-carbon composite material has high capacity and can further improve the energy density of the battery.

In any embodiment, the silicon nanoparticles include one or more of silicon-oxygen compounds, amorphous silicon, crystalline silicon, and silicon-carbon composites.

In any embodiment, the carbon matrix includes one or more of graphite, soft carbon, and hard carbon.

In any embodiment, a total volume of pores with a pore size greater than 100 nm in the carbon matrix particles is denoted as Vc1 $cm^3/g$, a total volume of pores with a pore size less than or equal to 100 nm in the carbon matrix particles is denoted as Vc2 $cm^3/g$, and the carbon matrix particles satisfy: $1 < Vc2/Vc1 \leq 30$, and optionally, $3 \leq Vc2/Vc1 \leq 25$.

By regulating the proportion of the total pore volume of pores with specific sizes in the porous carbon matrix particles, the pore size distribution of the carbon matrix particles can be made moderate, which is conducive to the entry of the silicon nanoparticles into the pores of the carbon matrix particles, and can endow the silicon-carbon composite material with certain mechanical strength, so as to maintain its structural stability during a cycling process, thereby optimizing its cycle performance.

In any embodiment, a ratio of a powder compaction density P11 $g/cm^3$ of the silicon-carbon composite material tested after 1 powder compaction under an action force of 20,000 N to a powder compaction density P21 $g/cm^3$ of the silicon-carbon composite material tested after 20 powder compactions under an action force of 20,000 N satisfies: $1.00 < P21/P11 \leq 1.20$, and optionally $1.02 \leq P21/P11 \leq 1.10$.

When the ratio of P21/P11 satisfies the range described above, the silicon-carbon composite material has relatively high specific capacity and relatively good pressure resistance, which improves the structural stability of the negative electrode film layer, thereby enabling the secondary battery containing the material to have relatively high energy density and relatively good cycle performance.

In any embodiment, the powder compaction density P11 $g/cm^3$ of the silicon-carbon composite material tested after 1 powder compaction under an action force of 20,000 N satisfies $1.10 \leq P11 \leq 1.40$, and optionally $1.12 \leq P11 \leq 1.35$.

When the powder compaction density P11 $g/cm^3$ of the silicon-carbon composite material after 1 powder compaction under an action force of 20,000 N satisfies the range described above, the negative electrode film layer has relatively high compaction density, such that the secondary battery has relatively high energy density.

In any embodiment, the secondary battery includes at least one of a lithium ion battery, a sodium ion battery, a magnesium ion battery, and a potassium ion battery.

A second aspect of the present application provides an electric device, including the secondary battery according to the first aspect of the present application.

## BRIEF DESCRIPTION OF THE DRAWINGS

FIG. 1 is a schematic diagram of a secondary battery according to one embodiment of the present application;

FIG. 2 is an exploded view of the secondary battery according to one embodiment of the present application as shown in FIG. 1;

FIG. 3 is a schematic diagram of an electric device using a secondary battery as a power source according to one embodiment of the present application.

Description of the reference numerals:
1: secondary battery; 11: housing; 12: electrode assembly; and 13: cover plate.

DETAILED DESCRIPTION

Hereinafter, embodiments of the binder, the preparation method, the electrode, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

With the expansion of the application range of secondary batteries, the requirements for the performance of secondary batteries, such as energy density, have been gradually increasing. The silicon-based material has a high specific capacity and is suitable as a negative electrode material for high-energy-density batteries. However, the silicon-based material has a large volume expansion rate during the charging and discharging process, and the volume change is significant particularly under high temperature conditions, resulting in deterioration of battery performance.

Based on this, the present application provides a secondary battery including: a negative electrode plate and an electrolyte. The negative electrode plate includes a silicon-carbon composite material having a three-dimensional network cross-linked pore structure; the electrolyte includes a lithium sulfonimide salt.

Herein, the three-dimensional network cross-linked pore structure generally refers to a structure in which two or more pores are intercommunicated or staggered and share a pore volume with each other in a silicon-carbon composite material, particularly in a pore structure formed by carbon matrix particles.

The pore structure of the silicon-carbon composite material can be tested using equipment and methods known in the art. For example, the test can be performed by using a scanning electron microscope (e.g., ZEISS Sigma 300). As an example, the test can be performed according to the following steps: Firstly, a negative electrode plate including the silicon-carbon composite material is cut into a test sample with a certain size (e.g., 6 mm $\times$ 6 mm), the test sample is sandwiched between two electrically and thermally conductive sheets (such as copper foils), the test sample and the sheets are stuck and fixed with an adhesive (such as double-sided adhesive) and pressed with a flat iron block with a certain mass (such as about 400 g) for a certain period of time (such as 1 h) to make the gap between the test sample and the copper foils as small as possible, then the edges are trimmed neatly with scissors, and the sample is stuck to a sample stage with a conductive

adhesive, with the sample slightly extending beyond the edge of the sample stage. Then, the sample stage is placed into a sample holder and locked in place, an argon ion cross-section polisher (such as IB-19500CP) is turned on and evacuated (e.g., 10 Pa to 4 Pa), the argon flow (e.g., 0.15 MPa), voltage (e.g., 8 KV) and polishing time (e.g., 2 h) are set, the sample stage is adjusted to swing mode, and the polishing is started. After the polishing is completed, an image of the ion-polished cross-sectional morphology (CP) of the test sample is obtained by using a scanning electron microscope (such as ZEISS Sigma 300).

The silicon-carbon composite material having a three-dimensional network cross-linked pore structure has a stable porous skeleton and good mechanical strength, and can effectively reduce the volume change of silicon before and after charging and discharging while loading a high silicon content. Meanwhile, the lithium sulfonimide salt can easily enter the pore structure of the silicon-carbon composite material to generate a solid electrolyte film containing sulfur oxide and nitrogen oxide on the interface of a silicon-based material, thereby improving the high-temperature cycle performance and the storage performance of the battery.

In any embodiment, a pore volume per unit mass of the silicon-carbon composite material is Vm in $cm^3/g$; in the electrolyte, a mass proportion of the lithium sulfonimide salt based on the total mass of the electrolyte is EL in g/g; a ratio EL:Vm of the pore volume Vm of the silicon-carbon composite material to the mass proportion EL of the lithium sulfonimide salt in the electrolyte is 0.1-10, and preferably 0.5-6.

In some embodiments, a ratio EL:Vm of the pore volume Vm of the silicon-carbon composite material to the mass proportion of the lithium sulfonimide salt in the electrolyte is optionally 0.1, 0.2, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5, or 10.

The pore volume Vm of the silicon-carbon composite material can be calculated by the following formula: Vm = $l/\rho_{tru'} \times \alpha/(1 - \alpha)$, where ρtrue represents the true density of the silicon-carbon composite material and $\alpha$ represents the porosity of the silicon-carbon composite material. The porosity refers to the ratio of the pore volume within the particles to the total volume of the carbon matrix particles. The porosity can be determined by the gas displacement method according to GB/T 24586. Porosity W = (L1 - L2)/L1 $\times$ 100%, where L1 represents the apparent volume of the sample and L2 represents the true volume of the sample. The true density has a well-known meaning in the art, which refers to the actual mass of a solid substance per unit volume of a material in an absolutely dense state, i.e., the density after removal of voids inside the material or voids between particles. It can be determined using instruments and methods known in the art. For example, GB/T 24586-2009 can be referred to for the test method, and a true density tester can be used as the test instrument. As an example, the test can be performed according to the following steps: A clean and dry sample cup is taken and placed on a balance, and the balance is teared. A certain amount of powder sample is added into the sample cup (for example, the sample can occupy 1/2 of the volume of the sample cup), and the mass of the sample is recorded. The sample cup containing the sample is placed in a true density tester for a closed test. Helium gas is introduced, and the pressures of gases in a sample chamber and an expansion chamber are detected. The true volume is calculated according to Boyle's law, and the true density is further calculated.

When the ratio EL:Vm of the pore volume Vm of the silicon-carbon composite material to the mass proportion EL of the lithium sulfonimide salt in the electrolyte satisfies the range described above, the addition amount of the lithium sulfonimide salt can form mutual cooperation with the pore volume Vm of the silicon-carbon composite material, thereby improving the high-temperature cycle performance and the high-temperature storage performance of the battery.

In some embodiment, the pore volume Vm per unit mass of the silicon-carbon composite material is 0.01-0.3 $cm^3/g$, and optionally 0.04-0.15 $cm^3/g$.

In some embodiments, a pore volume per unit mass of the silicon-carbon composite material is optionally 0.01 $cm^3/g$, 0.015 $cm^3/g$, 0.02 $cm^3/g$, 0.025 $cm^3/g$, 0.03 $cm^3/g$, 0.035 $cm^3/g$, 0.04 $cm^3/g$, 0.045 $cm^3/g$, 0.05 $cm^3/g$, 0.055 $cm^3/g$, 0.06 $cm^3/g$, 0.065 $cm^3/g$, 0.07 $cm^3/g$, 0.075 $cm^3/g$, 0.08 $cm^3/g$, 0.085 $cm^3/g$, 0.09 $cm^3/g$, 0.095 $cm^3/g$, 0.01 $cm^3/g$, 0.015 $cm^3/g$, 0.02 $cm^3/g$, 0.025 $cm^3/g$, or 0.3 $cm^3/g$.

When the pore volume of the silicon-carbon composite material satisfies the range described above, both the mechanical strength of the silicon-carbon composite material and the silicon loading amount can be ensured, and the high-temperature performance of the battery can be improved by effective cooperation with the lithium sulfonimide salt in the electrolyte.

In some embodiments, a specific surface area per unit mass of the silicon-carbon composite material is SSA in $m^2/g$; in the electrolyte, a mass proportion of the lithium sulfonimide salt based on the total mass of the electrolyte is EL in g/g; a ratio EL:SSA of the mass proportion of the lithium sulfonimide salt in the electrolyte to the specific surface area SSA of the silicon-carbon composite material is 0.002-0.2, and optionally 0.01-0.08.

Herein, the specific surface area SSA has a well-known meaning in the art, is generally expressed in the unit of $m^2/g$, and can be determined by methods and instruments known in the art. For example, the specific surface area can be determined by the analysis and testing method of specific surface area by inert gas (such as nitrogen) adsorption with reference to GB/T 19587-2017 and calculated by the Brunauer Emmett Teller (BET) method. The analysis and testing method of specific surface area by nitrogen adsorption can be performed by using a Tri-Star model 3020 specific surface area and pore size analyzer from Micromeritics, USA. In some embodiments, the ratio EL:SSA of the mass proportion of

the lithium sulfonimide salt in the electrolyte and the specific surface area SSA of the silicon-carbon composite material is optionally 0.005, 0.006, 0.007, 0.008, 0.009, 0.01, 0.015, 0.02, 0.025, 0.03, 0.035, 0.04, 0.045, 0.05, 0.055, 0.06, 0.065, 0.07, 0.075, 0.08, 0.085, 0.09, 0.095, 0.1, 0.11, 0.12, 0.13, 0.14, or 0.15.

When the ratio EL:SSA of the mass proportion of the lithium sulfonimide salt in the electrolyte to the specific surface area SSA of the silicon-carbon composite material is within the range described above, the lithium sulfonimide salt can be effectively embedded into the pore structure of the silicon-carbon composite material to make full contact with the silicon-carbon composite material, so as to improve the interface stability, thereby improving the high-temperature performance of the battery.

In some embodiments, the specific surface area SSA of the silicon-carbon composite material is 2-10 $m^2$/g, and optionally 3-7 $m^2$/g.

When the specific surface area SSA of the silicon-carbon composite material satisfies the range described above, the silicon-carbon composite material has a large specific surface area and relatively good dynamic performance.

In some embodiments, in the electrolyte, a mass proportion of the lithium sulfonimide salt based on the total mass of the electrolyte is EL in g/g; a total pore volume of pores with a pore size less than or equal to 100 nm in the silicon-carbon composite material is V1 $cm^3$/g; EL:V1 is 1-100, and optionally 7-62.

GB/T 19587-2004 can be referred to for the test method for pores with different pore sizes. The Barret joyner Halenda (BJH) method for testing mesoporous pore size distribution is used. Under the micro-mesoporous model, the gas adsorption-desorption method is used for testing, and the data of the adsorption branch are selected. Then, the total pore volume V1 of the pores with a pore size less than or equal to 100 nm is determined and statistically calculated.

In some embodiments, the ratio EL:V1 of the mass proportion EL of the lithium sulfonimide salt in the electrolyte to the total pore volume V1 of pores with a pore size less than or equal to 100 nm in the silicon-carbon composite material is optionally 1, 2, 3, 4, 5, 6, 7, 8, 9, 10, 15, 20, 25, 30, 35, 40, 45, 50, 55, 60, 65, 70, 75, 80, 85, 90, 95, or 100.

When the ratio EL:V1 of the mass proportion of the lithium sulfonimide salt in the electrolyte to the total pore volume V1 of pores with a pore size of less than or equal to 100 nm in the silicon-carbon composite material satisfies the range described above, the lithium sulfonimide salt can effectively enter the pore structure of the silicon-carbon composite material, such that the stability of an electrode/electrolyte interface is improved, and thus the high-temperature storage life of the battery is prolonged.

In some embodiments, V1 of the silicon-carbon composite material is $\geq$ 0.001 $cm^3$/g, and optionally 0.005-0.01 $cm^3$/g.

In some embodiments, V1 of the silicon-carbon composite material is optionally 0.001, 0.002, 0.003, 0.004, 0.005, 0.006, 0.007, 0.008, 0.009, or 0.01 $cm^3$/g.

When V1 of the silicon-carbon composite material satisfies the range described above, the silicon-carbon composite material can not only have good mechanical strength, but also effectively cooperate with the lithium sulfonimide salt in the electrolyte, thereby improving the cycle performance of the battery. In some embodiments, the lithium sulfonimide salt is represented by formula I,

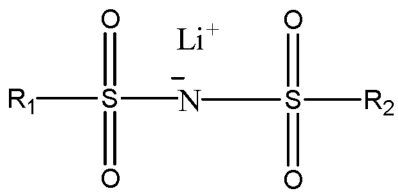

formula I

where $R_1$ and $R_2$ are each independently selected from halogen and halogen-substituted or unsubstituted $C_1$-$C_6$ alkyl.

In some embodiments, the lithium sulfonimide salt is selected from at least one of lithium bis(fluorosulfonyl)imide

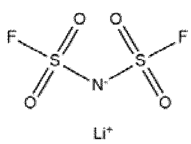

,

lithium bis(trifluoromethanesulfonyl)imide

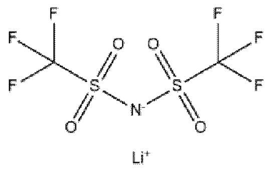

,

and lithium (fluorosulfonyl)(trifluoromethanesulfonyl)imide

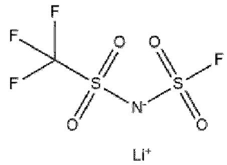

.

The lithium sulfonimide salts described above can not only improve the thermal stability and chemical stability of the electrolyte, but also generate components containing S and N elements in an interface film, so as to improve the high-temperature stability of an electrode/electrolyte interface, thereby improving the high-temperature cycle performance and storage performance of the battery.

In some embodiments, the silicon-carbon composite material includes carbon matrix particles and silicon nanoparticles. The carbon matrix particles have a three-dimensional network cross-linked pore structure; the silicon nanoparticles are at least partially embedded in the three-dimensional network cross-linked pore structure of the carbon matrix particles.

The carbon matrix particles of the present application have a stable porous skeleton structure, with strong supporting capacity, which is manifested as relatively high stress resistance, and they have excellent mechanical properties and electrical conductivity. The carbon matrix particles include a three-dimensional network cross-linked pore structure, which provides a relatively large amount of space for embedding the silicon-based nanoparticles, and they can be used for storing a large amount of silicon, thereby effectively improving the silicon loading amount in the silicon-carbon composite material. After the carbon matrix particles and the silicon-based nanoparticles are compounded, the electrical conductivity of the silicon-carbon composite material can be improved, the volume effect of silicon during a lithium deintercalation process can be relieved, and the stress change of the silicon-based nanoparticles can be fully borne, such that the structural stability of the silicon-carbon composite material is ensured, and the cycle performance and the lithium storage capacity of the silicon-carbon composite material are improved. Therefore, when the silicon-carbon composite material is applied to a secondary battery, the cycle performance and energy density of the secondary battery can be improved.

In some embodiments, the mass proportion of the silicon nanoparticles in the silicon-carbon composite material is greater than or equal to 40%, and optionally 40%-60%.

In some embodiments, the mass proportion of the silicon nanoparticles in the silicon-carbon composite material is optionally 40%, 45%, 50%, 55%, or 60%.

The mass of the silicon nanoparticles in the silicon-carbon composite material can be determined by methods and equipment known in the art. For example, it can be determined with reference to the EPA 6010D-2014 standard. Specifically, inductively coupled plasma emission spectrometry (ICP-OES) can be used for elemental analysis. A test solid is dissolved into a liquid with a strong acid, then the liquid is introduced into an ICP light source in an atomization mode, and further, after test gaseous atoms are ionized and excited in a strong magnetic field, they return from the excited state to the ground state. During the process described above, the energy is released and recorded as different characteristic spectral lines for the quantitative analysis of trace elements.

The negative electrode material used in the secondary battery of the present application realizes high loading of the silicon nanoparticles in the negative electrode material by using the carbon-based material having a three-dimensional network cross-linked pore structure, such that the silicon-carbon composite material has high capacity and can further improve the energy density of the battery.

In some embodiments, the silicon nanoparticles include one or more of silicon-oxygen compounds, amorphous silicon, crystalline silicon, and silicon-carbon composites.

In some embodiments, the carbon matrix includes one or more of graphite, soft carbon, and hard carbon.

In some embodiments, a total volume of pores with a pore size greater than 100 nm in the carbon matrix particles is denoted as Vc1 $cm^3/g$, a total volume of pores with a pore size less than or equal to 100 nm in the carbon matrix particles is denoted as Vc2 $cm^3/g$, and the carbon matrix particles satisfy: $1 < Vc2/Vc1 \leq 30$, and optionally, $3 \leq Vc2/Vc1 \leq 25$.

In some embodiments, Vc2/Vc1 is 2, 3, 4, 5, 6, 7, 8, 9, 10, 11, 12, 13, 14, 15, 16, 17, 18, 19, 20, 21, 22, 23, 24, or 25.

By regulating the proportion of the total pore volume of pores with specific sizes in the porous carbon matrix

particles, the pore size distribution of the carbon matrix particles can be made moderate, which is conducive to the entry of the silicon nanoparticles into the pores of the carbon matrix particles, and can endow the silicon-carbon composite material with certain mechanical strength, so as to maintain its structural stability during a cycling process, thereby optimizing its cycle performance.

In some embodiments, a ratio of a powder compaction density P11 $g/cm^3$ of the silicon-carbon composite material tested after 1 powder compaction under an action force of 20,000 N to a powder compaction density P21 $g/cm^3$ of the silicon-carbon composite material tested after 20 powder compactions under an action force of 20,000 N satisfies: $1.00 < P21/P11 \leq 1.20$, and optionally $1.02 \leq P21/P11 \leq 1.10$.

In some embodiments, P21/P11 may optionally be 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, or 1.20.

When the ratio of P21/P11 satisfies the range described above, the silicon-carbon composite material has relatively high specific capacity and relatively good pressure resistance, which improves the structural stability of the negative electrode film layer, thereby enabling the secondary battery containing the material to have relatively high energy density and relatively good cycle performance.

In some embodiments, the powder compaction density P11 $g/cm^3$ of the silicon-carbon composite material tested after 1 powder compaction under an action force of 20,000 N satisfies $1.10 \leq P11 \leq 1.40$, and optionally $1.12 \leq P11 \leq 1.35$.

In some embodiments, P11 may optionally be 1.10, 1.11, 1.12, 1.13, 1.14, 1.15, 1.16, 1.17, 1.18, 1.19, 1.20, 1.21, 1.22, 1.23, 1.24, 1.25, 1.26, 1.27, 1.28, 1.29, 1.30, 1.31, 1.32, 1.33, 1.34, 1.35, 1.36, 1.37, 1.38, 1.39, or 1.40.

When the powder compaction density P11 $g/cm^3$ of the silicon-carbon composite material after 1 powder compaction under an action force of 20,000 N satisfies the range described above, the negative electrode film layer has relatively high compaction density, such that the secondary battery has relatively high energy and cycle performance.

In some embodiments, the secondary battery includes a negative electrode plate. The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

In some embodiments, the secondary battery includes a positive electrode plate. The positive electrode plate includes a positive electrode current collector and a positive electrode film layer disposed on at least one surface of the positive electrode current collector, and the positive electrode film layer includes a positive electrode active material according to the first aspect of the present application.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The

composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a positive electrode active material for use in batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other traditional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as $LiCoO_2$), a lithium nickel oxide (such as $LiNiO_2$), a lithium manganese oxide (such as $LiMnO_2$ or $LiMn_2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), a lithium nickel cobalt aluminum oxide (such as $LiNi_{0.85}Co_{0.15}Al_{0.05}O_2$), and modified compounds thereof. Examples of the lithium-containing phosphate with an olivine structure may include, but are not limited to, at least one of lithium iron phosphate (such as $LiFePO_4$ (also referred to as LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

In some embodiments, the positive electrode active material is a nickel-rich material, and the molar proportion of a nickel element in the transition metal of the positive electrode active material is greater than 85%.

In some embodiments, the positive electrode film layer further optionally includes a binder. As an example, the binder may include at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

In some embodiments, the secondary battery further includes a separation film. The present application does not particularly limit the type of the separation film, and any porous-structure separation film known to have good chemical stability and mechanical stability may be selected and used.

In some embodiments, the separation film may be made of a material selected from at least one of glass fiber, non-woven fabric, polyethylene, polypropylene, and polyvinylidene difluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the secondary battery includes at least one of a lithium ion battery, a sodium ion battery, a magnesium ion battery, and a potassium ion battery.

In one embodiment of the present application, provided is an electric device, which includes the secondary battery according to any one of the embodiments.

The present application does not particularly limit the shape of the secondary battery, and it may have a cylindrical shape, a prismatic shape, or any other shape. For example, FIG. 1 shows a secondary battery 1 having a prismatic structure as one example.

In some embodiments, referring to FIG. 2, the outer packaging may include a housing 11 and a cover plate 13. The housing 11 may include a bottom plate and a side plate connected to the bottom plate, and the bottom plate and the side plate define, in an enclosing manner, an accommodating cavity. The housing 11 is provided with an opening communicating with the accommodating cavity, and the cover plate 13 is capable of lidding the opening to close the accommodating cavity. The positive electrode plate, the negative electrode plate, and the separation film may be subjected to a winding process or a stacking process to form an electrode assembly 12. The electrode assembly 12 is packaged in the accommodating cavity. The electrolyte is infiltrated into the electrode assembly 12. The number of the electrode assembly 12 included in the secondary battery 1 may be one or more, and those skilled in the art can select the number according to specific and actual needs.

The electric device includes the secondary battery provided by the present application. The secondary battery may be used as a power source for the electric device, or as an energy storage unit for the electric device. The electric

device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

FIG. 3 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

## Examples

Hereinafter, examples of the present application are described. The examples described below are illustrative and are merely used to explain the present application, and they should not be construed as limiting the present application. Examples without techniques or conditions specified therein are implemented according to techniques or conditions described in the literature in the art or according to product instructions. Reagents or instruments used herein without specified manufacturers are all commercially available conventional products.

### I. Preparation method

Example 1

(1) Preparation of silicon-carbon composite material

A gas containing a silicon precursor was provided to carbon matrix particles having a three-dimensional network cross-linked pore structure;
silicon nanoparticles attached to the carbon matrix particles were generated from the silicon precursor through chemical vapor deposition to obtain a silicon-carbon composite material. The silicon precursor was silane and the carbon matrix was hard carbon.

A total volume of pores with a pore size less than or equal to 100 nm in the carbon matrix particles was denoted as Vc2 $cm^3/g$, a total volume of pores with a pore size greater than 100 nm in the carbon matrix particles was denoted as Vc1 $cm^3/g$, and Vc2/Vc1 was 10.5. A powder compaction density P11 of the silicon-carbon composite material tested after 1 powder compaction under an action force of 20,000 N was 1.11 $g/cm^3$, a compaction density of the silicon-carbon composite material tested after 20 powder compactions under an action force of 20,000 N was denoted as P21, and a ratio of P21 to P11 was 1.02.

(2) Preparation of negative electrode plate

A negative electrode active material (silicon-carbon composite), conductive carbon black, a thickener (sodium carboxymethylcellulose (CMC)) and a binder (styrene-butadiene rubber emulsion (SBR)) were thoroughly mixed with stirring according to a weight ratio of 96.5:1.0:1.0:1.5 in a proper amount of deionized water to form a uniform negative electrode slurry. Then, a negative electrode current collector was coated with the negative electrode slurry, and the coated negative electrode current collector was subjected to processes such as drying to obtain a negative electrode plate.

(3) Preparation of positive electrode plate

An aluminum foil with a thickness of 8 μm was used as a positive electrode current collector. A positive electrode active material ($LiNi_{0.8}Co_{0.1}Mn_{0.1}O_2$ ($NCM_{811}$)), a conductive agent (acetylene black), and a binder (polyvinylidene difluoride (PVDF)) were dissolved according to a weight ratio of 93:2:5 in a solvent (N-methylpyrrolidone (NMP)), and thoroughly mixed well with stirring to obtain a positive slurry. Then, a positive electrode current collector was uniformly coated with the positive electrode slurry, and the coated positive electrode current collector was subjected to drying, cold pressing and cutting to obtain a positive electrode plate.

(4) Preparation of electrolyte

Ethylene carbonate (EC), ethyl methyl carbonate (EMC), and diethyl carbonate (DEC) were mixed according to a volume ratio of 1:1:1 to obtain an organic solvent. Then, a fully dried lithium salt (LiPF6) was dissolved in the mixed organic solvent to prepare an electrolyte with the concentration of 1 mol/L, and 8 wt% of lithium sulfonimide salt was added as an additive.

(5) Separation film

A polypropylene film was used as the separation film.

(6) Preparation of battery

The positive electrode plate, the separation film, and the negative electrode plate were stacked in sequence, with the separation film placed between the positive electrode plate and the negative electrode plate to fulfill the function of separation. Then, the stack was wound to obtain a bare battery cell, and the tabs were welded to the bare battery cell. The bare battery cell was placed in an aluminum shell, which was then baked at 80 °C to remove water, injected with an electrolyte, and sealed to obtain an uncharged battery. The uncharged battery was then subjected to the processes of standing, hot and cold pressing, formation, shaping, capacity testing, and the like sequentially, to obtain the lithium ion battery product of Example 1.

Examples 2-3

The batteries of Examples 2-3 were prepared in a similar manner to that of Example 1, except that the type of additives was adjusted. The specific parameters are shown in Table 1.

Examples 4-7

The batteries of Examples 4-7 were prepared in a similar manner to that of Example 1, except that the addition amount of the lithium sulfonimide salt was adjusted. The specific parameters are shown in Table 1.

Examples 8-11

The batteries of Examples 8-11 were prepared in a similar manner to that of Example 1, except that the porosity parameter of the silicon-carbon composite material and the addition amount of the lithium sulfonimide salt were adjusted simultaneously. The specific parameters are shown in Table 1.

Comparative Example 1

Comparative Example 1 was substantially the same as Example 1, except that the lithium sulfonimide salt was not added to the electrolyte.

Comparative Example 2

Comparative Example 2 was substantially the same as Example 1, except that the pore structure of the carbon matrix particles in Comparative Example 2 was a honeycomb-like pore structure.

## II. Test Method

1. Silicon-carbon composite material

1) Structural characterization of silicon-carbon composite material

The pore structure of the silicon-carbon composite material can be tested using equipment and methods known in the art. For example, the test can be performed by using a scanning electron microscope (e.g., ZEISS Sigma 300). As an example, the test can be performed according to the following steps: Firstly, a negative electrode plate including the silicon-carbon composite material was cut into a test sample with a certain size (e.g., 6 mm × 6 mm), the test sample was sandwiched between two electrically and thermally conductive sheets (such as copper foils), the test sample and the sheets were stuck and fixed with an adhesive (such as double-sided adhesive) and pressed with a flat iron block with a certain mass (such as about 400 g) for a certain period of time (such as 1 h) to make the gap between the test sample and the copper foils as small as possible, then the edges were trimmed neatly with scissors, and the sample was stuck to a sample stage with a conductive adhesive, with the sample slightly extending beyond the edge of the sample stage. Then, the sample stage was placed into a sample holder and locked in place, an argon ion cross-section polisher (such as IB-19500CP) was turned on and evacuated (e.g., 10 Pa to 4 Pa), the argon flow (e.g., 0.15 MPa), voltage (e.g., 8 KV) and polishing time (e.g., 2 h) were set, the sample stage was adjusted to swing mode, and the polishing was started. After the

polishing was completed, an image of the ion-polished cross-sectional morphology (CP) of the test sample was obtained by using a scanning electron microscope (such as ZEISS Sigma 300).

2) Porosity of silicon-carbon composite material

A battery was disassembled and a powder was scraped from the negative electrode film layer. After high-temperature ablation, a binder was removed to obtain a silicon-carbon composite material powder. The porosity was determined by the gas displacement method according to GB/T 24586. Porosity P = (V1 - V2)/V1 × 100%, where V1 represents the apparent volume and V2 represents the true volume of the sample.

3) Specific surface area SSA of silicon-carbon composite material

The specific surface area was determined by the gas adsorption method according to the GB/T 19587-2017 test standard, specifically as follows: A silicon-carbon composite material was taken as a sample, and a sample tube was immersed in liquid nitrogen at -196 °C. The adsorption amount of nitrogen on the solid surface under different pressures was determined under a relative pressure of 0.05-0.30. The monolayer adsorption amount of the sample was obtained based on the BET multilayer adsorption theory and its formula, and thus the specific surface area of the negative electrode active material was calculated.

The calculation formula of BET is as follows:

$$\frac{P/P_0}{n_a(1-P/P_0)}=\frac{1}{n_m C}+\frac{C-1}{n_m C}\cdot\frac{P}{P_0}$$

where $n_a$ represents the amount of adsorbed gas, in mol/g; $p/p_0$ represents the relative pressure; nm represents the monolayer adsorption amount; C represents the adjustment parameter for limiting the number of adsorption layers on the adsorbent surface.

4) Pore size of silicon-carbon composite material

The pore size was determined by the gas adsorption method according to the GB/T 19587-2017 and GB/T 21650.2-2008 test standards, specifically as follows: A silicon-carbon composite material was taken as a sample, and the sample tube was immersed in liquid nitrogen at -196 °C. Nitrogen was adsorbed onto the test material under a relative pressure of 0-1. The pore size distribution of the porous material was characterized based on the relationship diagram of the volume of pores at different size levels vs. the corresponding partial pressures.

5) Powder compaction density

The powder compaction density was determined by using an electronic pressure testing machine (such as UTM7305) with reference to GB/T 24533-2009: A test powder sample with a given mass G was placed on a special compaction mold (with a bottom area S). Different pressures (20,000 N or 50,000 N in the present application) were applied. A pressure was maintained for 20 s and then released. After waiting for 10 s, the thickness H of the compacted 5 powder under the applied pressure was read from the device. The compaction density under the applied pressure was calculated as G/(H*S).

6) True density of silicon-carbon composite material

With reference to GB/T 24586-2009, a true density tester was used as the test instrument. As an example, the test was performed according to the following steps: A clean and dry sample cup containing a silicon-carbon composite material was taken and placed on a balance, and the balance was teared. A certain amount of powder sample was added into the sample cup (for example, the sample occupies 1/2 of the volume of the sample cup), and the mass of the sample was recorded. The sample cup containing the sample was placed in a true 25 density tester for a closed test. Helium gas was introduced, and the pressures of gases in a sample chamber and an expansion chamber were detected. The true volume was calculated according to Boyle's law, and the true density was further calculated.

7) Characterization of distribution of silicon and carbon elements in silicon-carbon composite material

The element distribution on the cross-section of the particles was determined by the energy-dispersive spectroscopy for ion-polished particle cross-section analysis according to the GB-T17359-2012 test standard.

2. Battery performance

1) High-temperature cycle capacity retention rate

At 45 °C, the secondary batteries prepared in the examples and comparative examples were subjected to constant current charging at a rate of 0.5 C to a charge cut-off voltage of 4.25 V, followed by constant voltage charging to a current of ≤ 0.05 C, left to stand for 5 min, then subjected to constant current discharging at a rate of 0.33 C to a discharge cut-off voltage of 2 V, and left to stand for 5 min, which was a charge-discharge cycle. The batteries were subjected to cyclic charge-discharge tests according to the method, and the capacity retention rates of the lithium ion batteries after 800 cycles were calculated.

2) High-temperature storage performance

The secondary batteries prepared in the examples and comparative examples were subjected to constant current charging at a rate of 0.5 C to a charge cut-off voltage of 4.25 V, followed by constant voltage charging to a current of ≤ 0.05 C, left to stand for 5 min, then subjected to constant current discharging at a rate of 0.33 C to a discharge cut-off voltage of 2 V, and left to stand for 5 min, which was a charge-discharge cycle. Then, the batteries were subjected to constant current charging at a rate of 0.5 C to a charge cut-off voltage of 4.25 V, followed by constant voltage charging to a current of ≤ 0.05 C. After the batteries were stored at 60 °C for 100 days, a charge-discharge cycle test was performed to calculate the capacity retention rates of the lithium ion batteries after high-temperature storage.

III. Analysis of test results of examples and comparative examples

The secondary batteries of the examples and comparative examples were prepared according to the methods described above, and various parameters were measured. The results are shown in Table 1 below.

Table 1

| No. | Negative electrode active material | Lithium sulfonimide salt | EL/Vm | EL/SSA | EL/V1 | Capacity retention rate after 800 cycles | Capacity retention rate after high-temperature storage for 100 days |
|---|---|---|---|---|---|---|---|
| Example 1 | Three-dimensional network cross-linked structure | Lithium bis(fluorosulfonyl)imide | 2 | 0.04 | 20 | 46% | 29% |
| Example 2 | Three-dimensional network cross-linked structure | Lithium bis(trifluoromethanesulf onyl)imide | 2 | 0.04 | 20 | 41% | 26% |
| Example 3 | Three-dimensional network cross-linked structure | Lithium (fluorosulfonyl) (trifluor omethanesulfonyl)imide | 2 | 0.04 | 20 | 42% | 25% |
| Example 4 | Three-dimensional network cross-linked structure | Lithium bis(fluorosulfonyl)imide | 0.5 | 0.01 | 5 | 31% | 21% |

(continued)

| No. | Negative electrode active material | Lithium sulfonimide salt | EL/Vm | EL/SSA | EL/V1 | Capacity retention rate after 800 cycles | Capacity retention rate after high-temperature storage for 100 days |
|---|---|---|---|---|---|---|---|
| Example 5 | Three-dimensional network cross-linked structure | Lithium bis(fluorosulfonyl)imide | 6 | 0.12 | 60 | 32% | 20% |
| Example 6 | Three-dimensional network cross-linked structure | Lithium bis(fluorosulfonyl)imide | 0.1 | 0.002 | 1 | 25% | 15% |
| Example 7 | Three-dimensional network cross-linked structure | Lithium bis(fluorosulfonyl)imide | 10 | 0.2 | 100 | 24% | 16% |
| Example 8 | Three-dimensional network cross-linked structure | Lithium bis(fluorosulfonyl)imide | 2 | 0.01 | 30 | 40% | 25% |
| Example 9 | Three-dimensional network cross-linked structure | Lithium bis(fluorosulfonyl)imide | 2 | 0.08 | 30 | 44% | 27% |
| Example 10 | Three-dimensional network cross-linked structure | Lithium bis(fluorosulfonyl)imide | 2 | 0.03 | 7 | 43% | 28% |
| Example 11 | Three-dimensional network cross-linked structure | Lithium bis(fluorosulfonyl)imide | 2 | 0.03 | 62 | 45% | 28% |
| Comparative Example 1 | Three-dimensional network cross-linked structure | / | / | / | / | 10% | 5% |
| Comparative Example 2 | Honeycomb-like pore structure | Lithium bis(fluorosulfonyl)imide | 2 | 0.04 | 20 | 13% | 7% |

As can be seen from the results of Table 1, the negative electrode active materials of the batteries of Examples 1-11 are silicon-carbon composite materials having a three-dimensional network cross-linked pore structure, and the

electrolytes contain the lithium sulfonimide salt. The batteries of Examples 1-11 exhibit a more excellent high-temperature cycle capacity retention rate and a more excellent high-temperature storage capacity retention rate than the battery of Comparative Example 1 in which the negative electrode active material is a silicon-carbon composite material having a three-dimensional network cross-linked pore structure and the electrolyte does not contain the lithium sulfonimide salt, and the battery of Comparative Example 2 in which the negative electrode active material is a silicon-carbon composite material having a honeycomb-like pore structure and the electrolyte contains the lithium sulfonimide salt.

In the comparative examples, the negative electrode is made of the silicon-carbon composite material having a honeycomb-like pore structure, and silicon particles are not easy to deposit in the honeycomb-like pore structure. Therefore, the silicon-based particles in the silicon-carbon composite material having the honeycomb-like pore structure have a low mass content of only 7%, the silicon element is concentratedly distributed on the surface of the composite material, and the carbon matrix is difficult to play a role in limiting the expansion of the silicon-based particles, resulting in poor cycle performance of the batteries.

From the comparison of Examples 4-5 and Examples 6-7, it can be seen that by controlling the ratio EL:Vm of the pore volume Vm of the silicon-carbon composite material and the mass proportion of lithium sulfonimide salt in the electrolyte within the range of 0.5-7, the cycle capacity retention rate and the high-temperature storage capacity retention rate of the battery can be improved.

As can be seen from Examples 8-11, by further controlling EL:SSA to be 0.01-0.08 or EL:V1 to be 7-62, the cycle performance of the battery is further improved.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

**1.** A secondary battery, comprising:

a negative electrode plate comprising a silicon-carbon composite material having a three-dimensional network cross-linked pore structure; and
an electrolyte comprising a lithium sulfonimide salt.

**2.** The secondary battery according to claim 1, wherein

a pore volume per unit mass of the silicon-carbon composite material is Vm in $cm^3/g$;
in the electrolyte, a mass proportion of the lithium sulfonimide salt based on the total mass of the electrolyte is EL in g/g;
a ratio EL:Vm of the pore volume Vm of the silicon-carbon composite material to the mass proportion EL of the lithium sulfonimide salt in the electrolyte is 0.1-10, and optionally 0.5-6.

**3.** The secondary battery according to claim 2, wherein the pore volume Vm per unit mass of the silicon-carbon composite material is 0.01-0.3 $cm^3/g$, and optionally 0.04-0.15 $cm^3/g$.

**4.** The secondary battery according to any one of claims 1 to 3, wherein

a specific surface area per unit mass of the silicon-carbon composite material is SSA in $m^2/g$;
in the electrolyte, a mass proportion of the lithium sulfonimide salt based on the total mass of the electrolyte is EL in g/g;
EL:SSA is 0.002-0.2, and optionally 0.01-0.08.

**5.** The secondary battery according to any one of claims 1 to 4, wherein the specific surface area SSA of the silicon-carbon composite material is 2-10 $m^2/g$, and optionally 3-7 $m^2/g$.

**6.** The secondary battery of any one of claims 1 to 5, wherein in the electrolyte, a mass proportion of the lithium sulfonimide salt based on the total mass of the electrolyte is EL in g/g; a total pore volume of pores with a pore size less

than or equal to 100 nm in the silicon-carbon composite material is V1 $cm^3/g$; EL:V1 is 1-100, and optionally 7-62.

**7.** The secondary battery according to any one of claims 1 to 6, wherein V1 of the silicon-carbon composite material is greater than or equal to 0.001 $cm^3/g$, and optionally 0.005-0.01 $cm^3/g$.

**8.** The secondary battery according to any one of claims 1 to 7, wherein the lithium sulfonimide salt is represented by formula I,

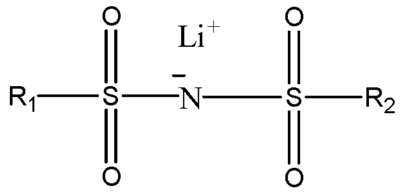

formula I

wherein $R_1$ and $R_2$ each independently comprise at least one of halogen and halogen-substituted or unsubstituted $C_1$-$C_6$ alkyl.

**9.** The secondary battery according to any one of claims 1 to 8, the lithium sulfonimide salt is selected from at least one of lithium bis(fluorosulfonyl)imide, lithium bis(trifluoromethanesulfonyl)imide, and lithium (fluorosulfonyl)(trifluoromethanesulfonyl)imide.

**10.** The secondary battery according to any one of claims 1 to 9, wherein the silicon-carbon composite material comprises: carbon matrix particles having a three-dimensional network cross-linked pore structure; and silicon nanoparticles at least partially embedded in the three-dimensional network cross-linked pore structure of the carbon matrix particles.

**11.** The secondary battery according to claim 10, wherein a mass proportion of the silicon nanoparticles in the silicon-carbon composite material is greater than or equal to 40%, and optionally 40%-60%.

**12.** The secondary battery according to claim 10 or 11, wherein the silicon nanoparticles comprise one or more of silicon-oxygen compounds, amorphous silicon, crystalline silicon, and silicon-carbon composites.

**13.** The secondary battery according to any one of claims 10 to 12, wherein the carbon matrix comprises one or more of graphite, soft carbon, and hard carbon.

**14.** The secondary battery according to any one of claims 10-13, wherein a total volume of pores with a pore size greater than 100 nm in the carbon matrix particles is denoted as Vc1 $cm^3/g$, a total volume of pores with a pore size less than or equal to 100 nm in the carbon matrix particles is denoted as Vc2 $cm^3/g$, and the carbon matrix particles satisfy: $1 < Vc2/Vc1 \leq 30$, and optionally, $3 \leq Vc2/Vc1 \leq 25$.

**15.** The secondary battery according to any one of claims 1 to 14, wherein a ratio of a powder compaction density P11 $g/cm^3$ of the silicon-carbon composite material tested after 1 powder compaction under an action force of 20,000 N to a compaction density P21 $g/cm^3$ of the silicon-carbon composite material tested after 20 powder compactions under an action force of 20,000 N satisfies: $1.00 < P21/P11 \leq 1.20$, and optionally $1.02 \leq P21/P11 \leq 1.10$.

**16.** The secondary battery according to any one of claims 1 to 15, wherein the powder compaction density P11 $g/cm^3$ of the silicon-carbon composite material tested after 1 powder compaction under an action force of 20,000 N satisfies: $1.10 \leq P11 \leq 1.40$, and optionally $1.12 \leq P11 \leq 1.35$.

**17.** The secondary battery according to any one of claims 1 to 16, wherein the secondary battery comprises at least one of a lithium ion battery, a sodium ion battery, a magnesium ion battery, and a potassium ion battery.

**18.** An electric device, comprising the secondary battery according to any one of claims 1 to 17.

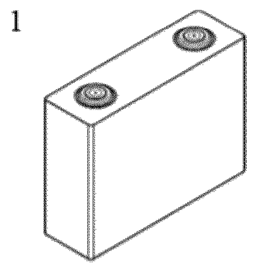


FIG. 1

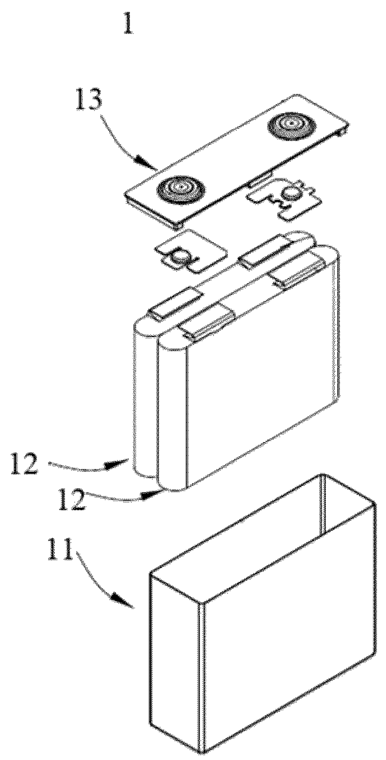


FIG. 2

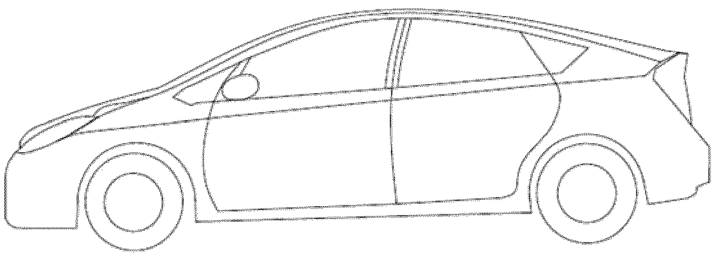

FIG. 3

## INTERNATIONAL SEARCH REPORT

International application No.
**PCT/CN2023/085707**

### A. CLASSIFICATION OF SUBJECT MATTER

H01M4/36(2006.01)i；H01M10/0567(2010.01)n；H01M4/587(2010.01)n；H01M4/38(2006.01)n；H01M10/0525(2010.01)n；H01M4/62(2006.01)n

According to International Patent Classification (IPC) or to both national classification and IPC

### B. FIELDS SEARCHED

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, WPABS, WPABSC: 负极, 阳极, 多孔碳, 多孔炭, 硅, 硅碳, 磺酰亚胺, 孔, 三维, anode, negative, carbon, porous, Si, silicon, LiFSA, LiFSI, LiTFSI, "LiN(SO2F)2", "LiN(CF3SO2)2"

### C. DOCUMENTS CONSIDERED TO BE RELEVANT

| Category* | Citation of document, with indication, where appropriate, of the relevant passages | Relevant to claim No. |
|---|---|---|
| X | US 2022059818 A1 (GROUP14 TECHNOLOGIES, INC.) 24 February 2022 (2022-02-24)<br>description, paragraphs [0010]-[0248], and claims 1-17, and tables 4-6 | 1-18 |
| X | WO 2022193286 A1 (NINGDE AMPEREX TECHNOLOGY LTD.) 22 September 2022 (2022-09-22)<br>description, paragraphs [0030]-[0090], and claims 1-15 | 1, 10, 17-18 |
| X | US 2023006215 A1 (NINGDE AMPEREX TECHNOLOGY LTD.) 05 January 2023 (2023-01-05)<br>description, paragraphs [0035]-[0123], and claims 1-18 | 1, 10, 17-18 |
| A | CN 113353911 A (A123 SYSTEMS LLC et al.) 07 September 2021 (2021-09-07)<br>entire document | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2023** | **25 December 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/085707**

| Patent document cited in search report | | | Publication date (day/month/year) | Patent family member(s) | | | Publication date (day/month/year) |
|---|---|---|---|---|---|---|---|
| US | 2022059818 | A1 | 24 February 2022 | None | | | |
| WO | 2022193286 | A1 | 22 September 2022 | CN | 115443559 | A | 06 December 2022 |
| US | 2023006215 | A1 | 05 January 2023 | KR | 20220130825 | A | 27 September 2022 |
| | | | | JP | 2023515589 | A | 13 April 2023 |
| | | | | EP | 4120393 | A1 | 18 January 2023 |
| | | | | WO | 2021179219 | A1 | 16 September 2021 |
| | | | | CN | 115088101 | A | 20 September 2022 |
| CN | 113353911 | A | 07 September 2021 | CN | 113353911 | B | 13 December 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 24586 T
- GB 245862009 T
- GB 245332009 T